# FASCICULE DE BREVET EUROPEEN

(11) **EP 0 441 714 B1**
(45) Date de publication et mention de la délivrance du brevet: **22.11.1995**
(21) Numéro de dépôt: 91400316.5
(22) Date de dépôt: 08.02.1991
(51) Int. Cl.: G06F 11/00

(54) **Dispositif de surveillance du fonctionnement d'un système à microprocesseur ou analogue**
Einrichtung zur Überwachung des Betriebs eines Mikroprozessorsystems oder dergleichen
Device for monitoring the operation of a microprocessor system or the like

(30) Priorité: 09.02.1990 FR 9001542
(43) Date de publication de la demande: 14.08.1991
(73) Titulaire: VALEO SECURITE HABITACLE, 78290 Croissy-Sur-Seine (FR)
(72) Inventeur: Saint-Joigny, Frédéric, F-75016 Paris (FR); Sague, Alain, F-92500 Rueil-Malmaison (FR)
(74) Mandataire: Schrimpf, Robert

(56) Documents cités:
- WO-A-88/04074
- DE-A- 3 328 027
- DE-A- 3 516 900
- DE-A- 3 836 870
- DE-A- 3 909 201
- GB-A- 2 120 428
- US-A- 4 403 185
- PATENT ABSTRACTS OF JAPAN, vol. 9, no. 232 (P-389)[1955], 18 spetembre 1985; & JP-A-60 086 627 (HANSHIN ELECTRIC K.K.) 16-05-1985

## Description

La présente invention concerne d'une façon générale la surveillance du fonctionnement de circuits a microprocesseurs ou analogues.

On connait déjà dans la technique antérieure des dispositifs de surveillance dont le fonctionnement est basé sur le contrôle de la fréquence d'un signal dérivé du circuit à microprocesseur, et qui engendre un signal d'anomalie lorsque cette fréquence sort d'une gamme de fréquences autorisées comprise entre un seuil inférieur et un seuil supérieur.

On peut envisager plusieurs types de signaux dérivés, pour détecter des défauts de fonctionnement ayant des causes diverses. On peut citer notamment:
- une variation du signal d'horloge du système, due par exemple à un décrochage de l'oscillateur;
- l'exécution par un programme d'une boucle sans fin;
- l'exécution d'un sous-programme spécifique dédié à la production du signal dérivé sus-mentionné;
- l'exécution par le microprocesseur d'une instruction inconnue.

Et selon le type de signal dérivé utilisé, le dispositif de surveillance connu est capable d'engendrer un signal indiquant que le défaut de fonctionnement correspondant s'est produit.

Cependant, tous les dispositifs connus sont désavantageux en ce qu'ils sont constitués par des circuits électroniques complexes, et donc coûteux.

En outre, ces dispositifs ont une consommation en courant importante, et cet aspect prend toute son importance dans le cas de la surveillance d'un système à microprocesseur monté à bord d'un véhicule et alimenté par l'accumulateur de celui-ci. Il est en effet impératif de maintenir cet accumulateur dans un état de charge convenable même lorsque le dispositif est en service pendant une durée prolongée,

On connaît également par WO-A-88 04074 un dispositif de surveillance du fonctionnement d'un micro-processeur ou analogue tel que défini dans le préambule de la revendication 1.

La présente invention vise à proposer un dispositif de surveillance de ce type, dont la construction soit extrêmement simple et économique et dont la consommation en courant soit tout à fait modérée.

Elle concerne à cet effet un dispositif tel que défini dans la revendication 1.

Des aspects préférés de ce dispositif sont définis dans les sous-revendications.

D'autres aspects, buts et avantages de la présente invention apparaitront mieux à la lecture de la description détaillée suivante d'une forme de réalisation préférée de celle-ci, donnée à titre d'exemple non limitatif et faite en référence au dessin annexé, sur lequel :
la figure 1 est un schéma d'un circuit de surveillance selon une forme de réalisation préférée de la présente invention, et
les figures 2a à 2c sont des ensembles de chronogrammes illustrant le comportement du circuit de la figure 1 respectivement dans trois cas de figure différents.

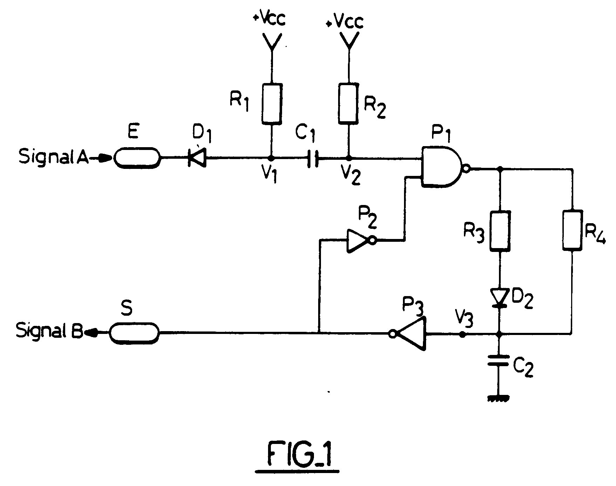

En référence tout d'abord à la figure 1, une forme de réalisation préférée d'un circuit selon l'invention comprend une borne d'entrée E pour un signal A qui sert de base à la surveillance, et une borne de sortie S sur laquelle est engendré un signal B pouvant comporter des impulsions de réinitialisation du dispositif surveillé dans le cas où un défaut de fonctionnement de celui-ci est constaté.

Le circuit est alimenté par une tension continue unique +V_{cc}, par exemple +5 volts.

La borne d'entrée E est reliée à la cathode d'une première diode D1, dont l'anode est reliée d'une part à une première borne d'une résistance R1 et d'autre part à une première borne d'un condensateur C1. La seconde borne de R1 est reliée à +V_{cc}. La seconde borne de C1 est reliée à une première borne d'une résistance R2 ainsi qu'à une première entrée d'une porte NON-ET indiquée en P1. La seconde borne de R2 est reliée à +V_{cc}.

La sortie de la porte P est reliée à une première borne d'une résistance R3 et à une première borne d'une résistance R4. La seconde borne de R3 est reliée à l'anode d'une seconde diode D2. Sa cathode est reliée à une première borne d'un second condensateur C2, dont la seconde borne est reliée à la masse (Ov). La seconde borne de R4 est reliée à la première borne de C2. La cathode de D2, la seconde borne de R4 et la première borne de C2 sont reliées à l'entrée d'un inverseur P3 dont la sortie est reliée à la borne de sortie S du circuit. La sortie de P3 est également reliée à l'entrée d'un autre inverseur P2 dont la sortie est reliée à la seconde entrée de P1.

De préférence, les éléments P1, P2 et P3 sont réalisés à l'aide d'un même circuit à quatre portes NON-ET, dont deux portes sont câblées de manière à réaliser la fonction inverseur.

Par ailleurs, les diverses tensions intermédiaires présentes dans le circuit de la figure 1 sont désignées comme suit :
V1: tension à l'anode de D1;
V2: tension à la première entrée de P1;
V3: tension à l'entrée de P3.

Le fonctionnement du circuit tel que décrit ci-dessus va maintenant être expliqué en référence aux figures 2a à 2c. Cette explication sera donnée en négligeant les tensions de seuil des diodes. Par ailleurs, on notera que les chronogrammes des figures 2a à 2c ont des échelles de temps différentes, représentées sous forme graphique.

Les chronogrammes de la figure 2a correspondent au cas où le signal A appliqué à l'entrée E a une fréquence F_{A} inférieure à une première fréquence de seuil notée F_{MIN}.

Le signal A est un signal logique de forme d'onde essentiellement carrée, variant entre 0 et 5 volts.

Lorsqu'initialement le signal A est à 5 volts, V1 et V2 sont au même potentiel, et C1 est déchargé.

Lorsque A passe de 5 à 0 volt (instant t₀), D1 est passante et V1 passe immédiatement à O volt et y reste tant que A n'évolue pas. V2 passe également immédiatement à 0 volt, mais C1 se charge ensuite rapidement à travers R2 pour ramener V2 à 5 volts, selon une courbe de charge caractérisée par la constante de temps R2C1. V2 reste à cette valeur tant que A n'évolue pas.

Lorsque A passe à nouveau de 0 à 5 volts (instant t₁), la diode D1 se bloque, si bien que C1 va se décharger par circulation d'un courant à travers R1. V1 va donc croître jusqu'à 5 volts selon une courbe de décharge caractérisée par la constante de temps R1C1, comme illustré, pour ensuite se stabiliser à cette valeur. Dans le même temps, il est créé au niveau de V2 une faible surtension, qui s'élimine au cours de la décharge par circulation d'un courant également à travers R2.

Le signal V2 appliqué à la première entrée de P2 définit donc une succession d'impulsions I à 0 volt (aux instants t₀ et t₄ notamment), en étant voisin de +5 volts en dehors de ces impulsions. On remarque que ces impulsions se produisent à la fréquence F_{A}.

On peut noter ici que le circuit constitué par P1, P2, P3, R3, R4, D2 et C2 est un oscillateur, dont le comportement est influencé par le signal V2 présent sur la première borne de P1.

Supposons initialement que V2 soit en permanence à +5 volts. Dans ce cas, P1 se comporte comme un inverseur vis-à-vis du signal appliqué à sa seconde entrée.

Supposons également que la seconde entrée de P1 soit à 0 volt, et que la sortie de P1 est donc à +5 volts. Dans ce cas, C2 s'est chargée à travers R3, D2 et R4, de telle sorte que V3 se rapproche 5 volts. Via P2 et P3, cette même tension est appliquée rapidement à la seconde entrée de P1, dont la sortie passe en conséquence à 0 volt.

C2 va donc se décharger à travers R4, à une vitesse déterminée par la constante de temps R4C2.

On peut noter ici que la valeur de R3 est choisie beaucoup plus faible que celle de R4, de manière à ce que C2 se charge très rapidement, essentiellement via R3, D2, mais se décharge beaucoup plus lentement, seulement via R4 puisque D2 est alors bloquée.

Ainsi C2 se décharge très lentement, et la tension V3 passe donc lentement de 5 volts à 0 volt. Lorsque le seuil bas VS de l'inverseur P3 est atteint, sa sortie bascule, de même que celle de P2, et l'on obtient après cette double inversion 0 volt sur la seconde entrée de P1. La sortie de P1 croît donc vers 5 volts tant que dure l'impulsion de 0 volt appliquée à la seconde entrée de P1 et C2 va à nouveau se charger rapidement. Il est à noter ici que les composants P1, P2 et P3 doivent se comporter en triggers de Schmidt, c'est à dire instaurer une certaine hystérésis dans la boucle de contre-réaction, pour permettre ce type de fonctionnement.

Ce circuit est donc un oscillateur qui délivre un signal en dents de scie qui varie entre une tension haute, déterminée par la durée de la phase de charge (fonction notamment du temps de réponse des portes) et la constante de temps R3C2, et une tension basse égale à la tension de seuil inférieur VS de l'inverseur P3, et à une fréquence sensiblement égale à 1/R4C2,

De nouveau en référence à la figure 2a, on a illustré le cas où une impulsion de tension I de 0 volt est appliquée à la première entrée de P1 au cours de la décharge de C2 (instant t₀), pendant que la seconde entrée de P1 est donc à 5 volts. Il en résulte que la sortie de P1 passe immédiatement à +5 volts, que C2 se charge à nouveau et que V3 remonte donc brutalement, jusqu'à une valeur (de l'ordre de 4 volts) qui est déterminée essentiellement par la durée de l'impulsion de tension 0 volt du signal V2.

Puis la décharge de C2 intervient de nouveau.

Et l'on constate sur la figure 2a que l'impulsion de 0 volt suivante (instant t₄) est suffisamment espacée dans le temps de la première pour que V3 puisse atteindre avant celle-ci la tension de seuil VS qui fait basculer P3 (instant t₂).

Il en résulte que la sortie de P3 passe de 0 volt à +5 volts; cette impulsion de tension est appliquée en tant que signal B sur la sortie S et constitue une impulsion de réinitialisation I′ du microprocesseur associé.

Dans le même temps, V3 croît de nouveau, jusqu'à une valeur qui est déterminée par la durée de charge de C2, et qui est en l'occurence de l'ordre de 2,5 volts. Le seuil inférieur de P3 est dans le présent à nouveau atteint à un instant t₃, et une nouvelle impulsion de réinitialisation I′ et une nouvelle charge de C2 ont lieu.

A l'instant t₄, la première entrée de P1 reçoit à nouveau une impulsion de 0 volt, et V3 croît alors jusqu'à environ 4 volts, puis le cycle se poursuit de la même manière.

Ainsi l'on constate que, dans le cas où F_{A} est inférieure à une fréquence F_{MIN} donnée (en l'occurence égale à la fréquence propre de l'oscillateur, déterminée entre autres par la constante de temps R4C2), des impulsions de réinitialisation I′ sont appliquées au microprocesseur.

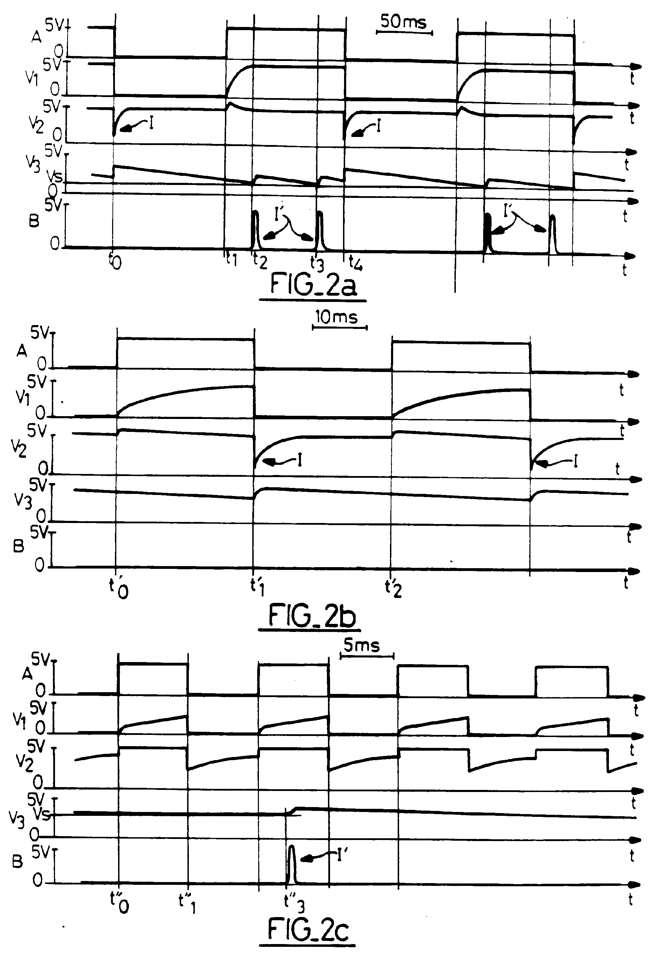

La figure 2b illustre le comportement du circuit lorsque F_{A} est supérieure à F_{MIN}.

Dans ce cas, V1 et V2 évoluent comme indiqué plus haut (les instants t′₀, t′₁ et t′₂ correspondant respectivement aux instants t₀, t₁ et t₄ de la figure 2a, à la différence d'échelle de temps près), mais les impulsions I appliquées par V2 à la première entrée de P1 apparaissent à la fréquence F_{A}>F_{MIN}. Il en résulte qu'au moins une telle impulsion I va se présenter à la première entrée de P1 avant le basculement des portes P2 et P3, c'est-à-dire avant que V3 n'atteigne la tension de seuil inférieure de P3, pour ainsi faire croître V3 en rechargeant C2. En conséquence, le signal V3, dont la tension est régulièrement "régénérée" par les impulsions de tension de V2, n'atteint jamais le seuil inférieur de P3, dont la sortie reste donc en permanence à 0 volt.

Il en résulte que, dans ce cas, aucune impulsion de réinitialisation n'est jamais engendrée.

En référence maintenant à la figure 2c, on va décrire le cas où la fréquence F_{A} est supérieure à un second seuil F_{MAX} qui sera défini plus loin.

Dans ce cas, la fréquence F_{A} est telle que la phase de montée de V1 de 0 à 5 volts, déclenchée par le passage de A de 0 à 5 volts (instant t˝₀), n'a pas le temps de se terminer avant que A ne passe à nouveau à zéro (à l'instant t˝₁), en étant suivi par V1.

Dans le cas de figure illustré, seule une tension de l'ordre de 2,5 volts est atteinte. En corollaire, la tension V2, qui était à peu près stabilisée à 5 volts pendant la phase où A était à 5 volts, ne chûte que d'environ 2,5 volts à l'instant t˝₁, pour atteindre par conséquence environ +2,5 volts. Et, lors de la charge de C1 qui s'en suit, V2 remonte à nouveau vers +5 volts.

Il en résulte que le seuil inférieur (par exemple de l'ordre de 2 volts) de la première entrée de P1 n'est jamais franchi, et que cette porte considère que le niveau logique de cette première entrée reste en permanence au niveau haut.

Les chutes de tension de la tension V2 ne sont donc pas considérées par la porte P1 comme des impulsions I modifiant le comportement de l'oscillateur, si bien que celui-ci fonctionne comme on l'a indiqué plus haut en prenant comme hypothèse le fait que la première entrée de P1 restait en permanence à +5 volts.

Il en résulte que la décharge de C2 peut se poursuivre librement jusqu'à ce que V3 franchisse le seuil inférieur de la porte P3 (à l'instant t˝₃), et ce phénomène se répète de façon périodique à une cadence égale à la fréquence propre de l'oscillateur.

Il en résulte dans ce cas que des impulsions de réinitialisation sont engendrées sur la sortie S à une fréquence égale à la fréquence propre de l'oscillateur.

On peut noter ici que la fréquence seuil F_{MAX} est déterminée conjointement par la constante de temps R2C1, qui détermine la vitesse de charge de C1, et par le niveau effectif du seuil inférieur de la première entrée de P1, c'est-à-dire la tension pour laquelle cette entrée est considérée, du point de vue logique, comme passant du niveau logique haut au niveau logique bas.

En conclusion, le circuit de la présente invention est capable, d'une manière extrêmement économique et fiable, de détecter un défaut de fonctionnement d'un microprocesseur ou analogue, concrétisé par une variation anormale dans un sens ou dans l'autre de la fréquence du signal A, et d'appliquer alors audit microprocesseur, avec un délai minime, une succession d'impulsions de réinitialisation de celui-ci. En outre, la consommation du circuit décrit ci-dessus est extrêmement faible, et peut être typiquement de l'ordre de quelques centaines de microampères.

En particulier, les diverses fonctions remplies par les sous-parties du circuit de la figure 1 peuvent être réalisées par d'autres circuits équivalents sans pour autant sortir du cadre de l'invention.

Par ailleurs, l'homme de l'art saura réaliser un circuit fonctionnant selon le même principe que celui décrit plus haut et dans lequel les niveaux logiques hauts et bas soient permutés, et l'évolution de la tension V3 inversée.

Enfin on notera que le dispositif selon l'invention peut être utilisé pour réinitialiser le microprocesseur dont le fonctionnement est surveillé, comme décrit ci-dessus, mais également, en alternative ou additionnellement, pour engendrer un signal d'avertissement sous une forme tout à fait quelconque.

## Revendications

1. Dispositif de surveillance du fonctionnement d'un microprocesseur ou analogue, capable d'engendrer un signal d'anomalie (I′) lorsque la fréquence (F_{A}) d'un signal (A) dérivé dudit microprocesseur franchit un seuil de fréquence inférieur (F_{MIN}) ou un seuil de fréquence supérieur (F_{MAX}), comprenant :
un oscillateur capable de produire de façon périodique une tension (V3) évoluant de façon monotone à partir d'une tension de départ, et incluant un circuit à seuil (P3) auquel est appliquée ladite tension monotone et capable d'engendrer sur une sortie du dispositif un signal d'anomalie (I′) à chaque fois que cette tension franchit un seuil de tension (VS) déterminé, ledit oscillateur comportant par ailleurs une entrée de rétablissement qui, lorsqu'elle est sollicitée par une impulsion de rétablissement (I), permet de ramener la tension monotone à un niveau de tension plus proche de la tension de départ,
un circuit de traitement (R1, R2, C1, D1) du signal dérivé (A) capable d'appliquer à ladite entrée de rétablissement des impulsions de rétablissement (I) à une fréquence égale à la fréquence (F_{A}) du signal dérivé lorsque cette fréquence est inférieure ou égale au seuil de fréquence supérieur (F_{MAX}), et de n'appliquer aucune impulsion de rétablissement lorsque la fréquence du signal dérivé excède ce seuil de fréquence supérieur, la vitesse d'évolution de la tension monotone (V3) étant telle que, lorsque lesdites impulsions de rétablissement sont produites à une fréquence inférieure audit seuil de fréquence inférieur (F_{MIN}), l'intervalle de temps entre deux impulsions de rétablissement successives est supérieur à l'intervalle de temps nécessaire pour que la tension monotone passe de la tension de départ à la tension de seuil (VS), et lorsque lesdites impulsions de rétablissement sont produites à une fréquence comprise entre les seuils de fréquence inférieur (Fmin) et supérieur (Fmax), l'intervalle de temps entre deux impulsions de rétablissement successives est inférieur à l'intervalle de temps nécessaire pour que la tension monotone (V3) passe de la tension de départ à la tension de seuil (VS) ;
caractérisé en ce que l'oscillateur comprend un condensateur (C2), une résistance (R3) de charge rapide du condensateur, une résistance (R4) de décharge lente du condensateur, une porte (P1) dont la sortie commande la charge et la décharge du condensateur, en ce que le circuit à seuil (P3) est inclus dans une boucle de contre-réaction entre le condensateur (C2) et une entrée de la porte, en ce qu'une autre entrée de la porte constitue l'entrée de rétablissement, et en ce que le circuit de traitement comprend une diode (D1) dont la cathode est reliée à l'entrée du signal dérivé et dont l'anode est reliée à une première borne d'une première résistance (R1) et à une première borne d'un condensateur (C1), la seconde borne du condensateur étant reliée à une première borne d'une seconde résistance (R2) et à l'entrée de rétablissement de l'oscillateur, les secondes bornes des première et seconde résistance (R1, R2) étant reliées à une source de tension continue (Vcc).

2. Dispositif selon la revendication 1, caractérisé en ce que la résistance de charge (R3) et la résistance de décharge (R4) sont montées en parallèle entre la sortie de la porte (P1) et une première borne du condensateur (C2), une diode (D2) étant montée en série avec la résistance de charge, la seconde borne du condensateur étant reliée à la masse.

3. Dispositif selon l'une des revendications 1 et 2, caractérisé en ce que la boucle de contre-réaction comprend deux inverseurs logiques (P3, P2) en série, dont celui (P3) qui est relié au condensateur (C2) constitue le circuit à seuil.

4. Dispositif selon l'une des revendications 1 à 3, caracterisé en ce que la porte (P1) est une porte NON-ET.

5. Dispositif selon l'une des revendications précédentes, caractérisé en ce que le signal d'anomalie est une impulsion (I′) de réinitialisation du microprocesseur, ou une succession de telles impulsions.

## Patentansprüche

1. Einrichtung zur Überwachung des Betriebs eines Mikroprozessorsystems oder dergleichen, die in der Lage ist, ein Störungssignal (I′) zu erzeugen, wenn die Frequenz (F_{A}) eines von dem besagten Mikroprozessor abgeleiteten Signals (A) eine untere Frequenzschwelle (F_{MIN}) unterschreitet bzw. eine obere Frequenzschwelle (F_{MAX}) überschreitet, bestehend aus:
einem Oszillator, der auf periodische Weise eine Spannung (V3) erzeugen kann, die sich von einer Anfangsspannung aus monoton entwickelt, und der eine Schwellwertschaltung (P3) enthält, an welche die besagte monotone Spannung angelegt wird und die in der Lage ist, an einem Ausgang der Einrichtung jedesmal ein Störungssignal (I′) zu erzeugen, wenn diese Spannung eine bestimmte Spannungsschwelle (VS) überschreitet, wobei der besagte Oszillator außerdem einen Rückstelleingang umfaßt, der bei seiner Ansteuerung durch einen Rückstellimpuls (I) die Rückstellung der monotonen Spannung auf einen Spannungspegel ermöglicht, der näher an der Anfangsspannung liegt,
einer Verarbeitungsschaltung (R1, R2, C1, D1) zur Verarbeitung des abgeleiteten Signals (A), die in der Lage ist, an den besagten Rückstelleingang Rückstellimpulse (I) mit einer Frequenz gleich der Frequenz (F_{A}) des abgeleiteten Signals anzulegen, wenn diese Frequenz kleiner oder gleich der oberen Frequenzschwelle (F_{MAX}) ist, und keinen Rückstellimpuls anzulegen, wenn die Frequenz des abgeleiteten Signals diese obere Frequenzschwelle übersteigt,
wobei die Entwicklungsgeschwindigkeit der monotonen Spannung (V3) so bemessen ist, daß, wenn die besagten Rückstellimpulse bei einer Frequenz erzeugt werden, die kleiner als die besagte untere Frequenzschwelle (F_{MIN}) ist, das Zeitintervall zwischen zwei aufeinanderfolgenden Rückstellimpulsen größer als das Zeitintervall ist, das notwendig wäre, damit die monotone Spannung von der Anfangsspannung zur Schwellenspannung (VS) übergeht, und wenn die besagten Rückstellimpulse bei einer Frequenz zwischen der unteren Frequenzschwelle (F_{MIN}) und der oberen Frequenzschwelle (F_{MAX}) erzeugt werden, das Zeitintervall zwischen zwei aufeinanderfolgenden Rückstellimpulsen kleiner als das Zeitintervall ist, das notwendig wäre, damit die monotone Spannung (V3) von der Anfangsspannung zur Schwellenspannung (VS) übergeht,
**dadurch gekennzeichnet**, daß der Oszillator einen Kondensator (C2), einen Widerstand (R3) für die schnelle Aufladung des Kondensators (C2), einen Widerstand (R4) für die langsame Entladung des Kondensators und ein Gatter (P1) umfaßt, dessen Ausgang die Aufladung und die Entladung des Kondensators steuert, daß die Schwellwertschaltung (P3) in einer Rückkopplungsschleife zwischen dem Kondensator (C2) und einem Eingang des Gatters enthalten ist, daß ein anderer Eingang des Gatters den Rückstelleingang bildet und daß die Verarbeitungsschaltung eine Diode (D1) enthält, deren Kathode mit dem Eingang des abgeleiteten Signals verbunden ist und deren Anode mit einem ersten Anschluß eines ersten Widerstands (R1) und mit einem ersten Anschluß eines Kondensators (C1) verbunden ist, während der zweite Anschluß des Kondensators mit einem ersten Anschluß eines zweiten Widerstands (R2) und mit dem Rückstelleingang des Oszillators verbunden ist, wobei die zweiten Anschlüsse des ersten und zweiten Widerstands (R1, R2) mit einer Gleichspannungsquelle (Vcc) verbunden sind.

2. Einrichtung nach Anspruch 1 , **dadurch gekennzeichnet**, daß der Aufladewiderstand (R3) und der Entladewiderstand (R4) zwischen dem Ausgang des Gatters (P1) und einem ersten Anschluß des Kondensators (C2) parallel geschaltet sind, wobei eine Diode (D2) mit dem Aufladewiderstand in Reihe geschaltet ist, während der zweite Anschluß des Kondensators mit der Masse verbunden ist.

3. Einrichtung nach einem der Ansprüche 1 und 2, **dadurch gekennzeichnet**, daß die Rückkopplungsschleife zwei in Reihe geschaltete logische Inverterschaltungen (P3, P2) enthält, von denen diejenige (P3), die mit dem Kondensator (C2) verbunden ist, die Schwellwertschaltung bildet.

4. Einrichtung nach einem der Ansprüche 1 bis 3, **dadurch gekennzeichnet**, daß es sich bei dem Gatter (P1) um ein NICHT-UND-Glied handelt.

5. Einrichtung nach einem der vorangehenden Ansprüche, **dadurch gekennzeichnet**, daß das Störungssignal ein Reinitialisierungsimpuls (I′) des Mikroprozessors oder eine Folge derartiger Impulse ist.

## Claims

1. A device for monitoring the operation of a microprocessor or the like, the device being capable of generating an error signal (I′) when the frequency (F_{A}) of a signal (A) derived from said microprocessor crosses a lower frequency threshold (F_{MIN}) or an upper frequency threshold (F_{MAX}), the device comprising:
an oscillator capable of producing a periodic voltage (V3) which varies monotonically from a starting voltage, and including a threshold circuit (P3) to which said monotonically varying voltage is applied and which is capable of generating an error signal (I′) on an output of the device each time said monotonically varying voltage crosses a determined voltage threshold (VS), said oscillator also including a reset input which, on receiving a reset pulse (I), serves to return the monotonically varying voltage to a level closer to its starting voltage; and
a treatment circuit for treating (R1, R2, C1, D1) for treating the derived signal (A) and capable of applying reset pulses (I) to said reset input at a frequency equal to the frequency (F_{A}) of the derived signal when said frequency is not greater than the upper frequency threshold (F_{MAX}), and to apply no reset pulse when the frequency of the derived signal exceeds said upper threshold frequency; the rate at which said monotonically varying voltage (V3) varies being such that when said reset pulses are produced at a frequency lower than said lower frequency threshold (F_{MIN}), the time interval between two successive reset pulses is greater than the time interval required for the monotonically varying voltage to go from the starting voltage to the threshold voltage (VS), and when said reset pulses are produced at a frequency lying between the lower frequency threshold (F_{MIN}) and the upper frequency threshold (F_{MAX}), the time interval between two successive reset pulses is less than the time interval required for the monotonically varying voltage (V3) to go from the starting voltage to the threshold voltage (VS); the device being characterized in that the oscillator comprises a capacitor (C2), a charging resistor (R3) for charging the capacitor quickly, a discharging resistor (R4) for discharging the capacitor slowly, and a gate (P1) whose output controls charging and discharging of the capacitor, in that the threshold treatment circuit (P3) is included in a feedback loop between the capacitor (C2) and one of the inputs of the gate, in that another input of the gate constitutes the reset input, and in that the treatment circuit comprises a diode (D1) whose cathode is connected to the derived signal input and whose anode is connected to a first terminal of a first resistor (R1) and to a first terminal of a capacitor (C1), the second terminal of the capacitor is connected to a first terminal of a second resistor (R2) and to the reset input of the oscillator, and the second terminals of the first and second resistors (R1, R2) are connected to a DC voltage source (Vcc).

2. A device according to claim 1, characterized in that the charging resistor (R3) and the discharging resistor (R4) are connected in parallel between the output of the gate (P1) and a first terminal of the capacitor (C2), a diode (D2) connected in series with the charging resistors, and the second terminal of the capacitor is connected to ground.

3. A device according to claim 1 or 2, characterized in that the feedback loop includes two logic inverters (P3, P2) in series, with the inverter (P3) connected to the capacitor (C2) constituting the threshold circuit.

4. A device according to any one of claims 1 to 3, characterized in that the gate (P1) is a NAND gate.

5. A device according to any preceding claim, characterized in that the error signal is a reinitialization pulse (I′) for the microprocessor, or a succession of such pulses.
